# EUROPEAN PATENT SPECIFICATION

(11) **EP 2 465 280 B1**
(45) Date of publication and mention of the grant of the patent: **10.10.2018**
(21) Application number: 10752657.6
(22) Date of filing: 09.08.2010
(51) Int. Cl.: H04W 16/20, H04W 24/08

(54) **ARRANGEMENT FOR DEPLOYING AND EVALUATING NETWORKS IN INDOOR ENVIRONMENTS**
ANORDNUNG FÜR DEN EINSATZ UND DIE BEWERTUNG VON NETZWERKEN IN INNENRÄUMEN
AGENCEMENT POUR DÉPLOYER ET ÉVALUER DES RÉSEAUX DANS DES ENVIRONNEMENTS INTÉRIEURS

(30) Priority: 10.08.2009 US 538531
(43) Date of publication of application: 20.06.2012
(73) Proprietor: Robert Bosch GmbH, 70442 Stuttgart (DE)
(72) Inventor: KIM, Ji, Eun, Pittsburgh PA 15213 (US); JAIN, Vivek, Mountain View CA 94040 (US); SRINIVASAN, Soundararajan, Mountain View CA 94043 (US); BENITEZ, Diego, Pittsburgh PA 15237 (US); SHELTON, Charles, Monroeville PA 15146 (US); PETRUS, Brad, Pittsburgh PA 15218 (US)
(74) Representative: Isarpatent
(86) International application number: PCT/US2010/044906
(87) International publication number: WO 2011/019663

(56) References cited:
- WO-A1-02/13009
- US-A- 5 987 328
- US-A1- 2004 162 840
- WOLFLE G ET AL: "Field strength prediction in indoor environments with neural networks", VEHICULAR TECHNOLOGY CONFERENCE, 1997, IEEE 47TH PHOENIX, AZ, USA 4-7 MAY 1997, NEW YORK, NY, USA,IEEE, US, vol. 1, 4 May 1997 (1997-05-04), pages 82-86, XP010228754, DOI: DOI:10.1109/VETEC.1997.596323 ISBN: 978-0-7803-3659-9

## Description

### BACKGROUND

### 1. Field of the Invention.

The present invention relates to deploying and evaluating networks, and, more particularly, to deploying and evaluating wired or wireless networks in indoor environments.

### 2. Description of the Related Art.

A wireless application deployment may include the three phases of installation/inspection, network evaluation, and redeployment/reinstallation. The first phase of installation/inspection may be performed manually by measuring signal strengths at various points and then installing the nodes at locations that have good signal reception. However, this method is not scalable for large networks. Hence, once the total number of nodes increases past a certain point, this method may not be practical. Some commercial tools are available on the market such as Motorola's LANPlanner which helps in providing the signal strength beforehand so that optimal locations can be predicted. However, this method is also insufficient as it deals with only WiFi technology (e.g., it does not consider other wireless protocols such as 802.15.4). Moreover, for use cases such as security/fire/intrusion detection applications wherein, in addition to wireless coverage, sensor coverage is also important, the current tools and methods are inefficient.

The second phase of network evaluation may include evaluating the network performance before and after installation. Prior to installation, performance may be generally evaluated by using network simulation tools such as OPNET, ns2, Qualnet, etc. However, these network simulators fail to evaluate the network in realistic scenarios in which performance may be affected due to mobile and immobile obstructions (such as walls, humans, etc.), interference due to other wireless technologies operating in the same band, and so on. On the other hand, post installation evaluation may determine whether the installed network is performing satisfactorily. If it is not, reinstallation or adjustment may be called for; no tool currently provides this functionality.

The third phase of redeployment/reinstallation may involve repeating the first phase of installation/inspection and the second phase of network evaluation. Thus, for a large network, many such adjustments may be performed in order to obtain the desired level of performance.

Other drawbacks of current tools and methods include the inability to obtain a good estimation of performance versus cost, and the inability to perform sensitivity analysis. Moreover, a new wireless network installation may affect, or be affected by, the existing wireless networks in the same frequency band, thereby degrading the performance of one or more networks sharing the same space. This is not accounted for in the known methods.
U.S. 5 987 328 discloses that from layout and attenuation data of an area and an initial guess, the placement and power levels of base stations and the resulting attenuation and base station ranges are calculated based on any chosen propagation model. A cost function is calculated which indicates the merit of the initial guess placement. The cost function is a function of the transmitter locations and power levels and can be calculated as a linear combination of the uncovered and interference areas. Other cost functions can also be considered. The cost function is optimized by one of several optimization methods to give the optimal base station placement. The optimization can be continuous or discrete. Continuous optimization methods include the modified steepest descent method and the downhill simplex method, while discrete optimization methods include the Hopfield neural network method. The optimization can be performed several times for different initial guess placements to achieve a global, rather than simply local, optimization. The entire optimization process is packaged in the form of an interactive software tool that permits the designer to steer and adjust the solution according to any criteria that the designer may choose.

According to existing methods, the installing, evaluating and handling of run-time wired or wireless network deployment are issues that are targeted only partially and independently. These known solutions are insufficient because they do not consider interdependencies amongst the individual issues.

What is neither disclosed nor suggested in the art is a method or system for deploying and evaluating wired/wireless networks that overcomes the above-described problems.

### SUMMARY OF THE INVENTION

Wireless technologies have contributed to extensive development of many kinds of applications that enable intelligent monitoring and control of physical environments, objects, smart buildings, home or industry automation, and activities such as remote patient care. For these kinds of applications, the present invention may provide analysis and simulation of system performance that considers the characteristics of the physical environments (e.g., external
environments and spatial and material properties). The invention may also provide large scale systems mixing several different types of monitoring and control.

The present invention may provide an arrangement for installing, evaluating and handling run-time wired or wireless network deployment, especially in indoor environments. The invention may be used as a marketing tool in negotiation with customers to provide an approximate range of investment depending on the desired or chosen performance.

The present invention may enable easy development, evaluation and deployment of wireless/wired network applications and protocols with relatively accurate information being provided about environmental conditions. Deployment scenarios may be evaluated before installation while taking into account regulatory requirements, if any. The performance of deployed systems may be improved by enabling reconfiguration and/or redeployment of a software component based on system properties. System design may be optimized with customer input by providing the customer with analysis of the sensitivity of system performance to hardware configurations of various monetary cost levels. Thus, the invention may provide a marketing tool by informing a potential customer of the costs of various levels of performance. The method may further provide a way to analyze the radio frequency interference caused by other interfering networks in the vicinity.

The invention comprises; an arrangement as defined in independent claim 1*.*

An advantage of the present invention is that analysis of protocols of wireless/wired systems may be performed with minimal efforts and with nearly accurate knowledge of environmental conditions; without requiring prior, manual RF characterization.

Another advantage is that a deployment scenario may be evaluated before installation while taking into account any existing regulatory requirements.

Yet another advantage is the improvement in the performance of deployed systems by runtime redeployment of components.

Still another advantage is the negotiation of system design with customers by performing sensitivity analysis of the cost of hardware versus performance.

The present invention includes methods for developing tools and procedures to provide the aforementioned benefits.

### BRIEF DESCRIPTION OF THE DRAWINGS

The above mentioned and other features and objects of this invention, and the manner of attaining them, will become more apparent and the invention itself will be better understood by reference to the following description of an embodiment of the invention taken in conjunction with the accompanying drawings, wherein:
FIG. 1 is a flow chart of one embodiment of a method of the present invention for deploying and evaluating network systems.
FIG. 2 is a flow chart of another embodiment of a method of the present invention for deploying and evaluating network systems.
FIG. 3 is a block diagram of an automatic inspection arrangement according to one embodiment of the present invention.
FIG. 4 is a block diagram of an automatic network evaluation arrangement according to one embodiment of the present invention.
FIG. 5 is a block diagram of an automatic runtime components deployment arrangement according to one embodiment of the present invention.
FIG. 6 is a flow chart of one embodiment of a method of the present invention for deploying and evaluating a network system.

Corresponding reference characters indicate corresponding parts throughout the several views. Although the drawings represent embodiments of the present invention, the drawings are not necessarily to scale and certain features may be exaggerated in order to better illustrate and explain the present invention. Although the exemplification set out herein illustrates embodiments of the invention, in several forms, the embodiments disclosed below are not intended to be exhaustive or to be construed as limiting the scope of the invention to the precise forms disclosed.

### DETAILED DESCRIPTION

The embodiments hereinafter disclosed are not intended to be exhaustive or limit the invention to the precise forms disclosed in the following description. Rather the embodiments are chosen and described so that others skilled in the art may utilize its teachings.

The present invention may provide an efficient method for deploying and evaluating networks, such as wireless networks. The invention may also provide methods for developing tools and procedures for deploying and evaluating such networks.

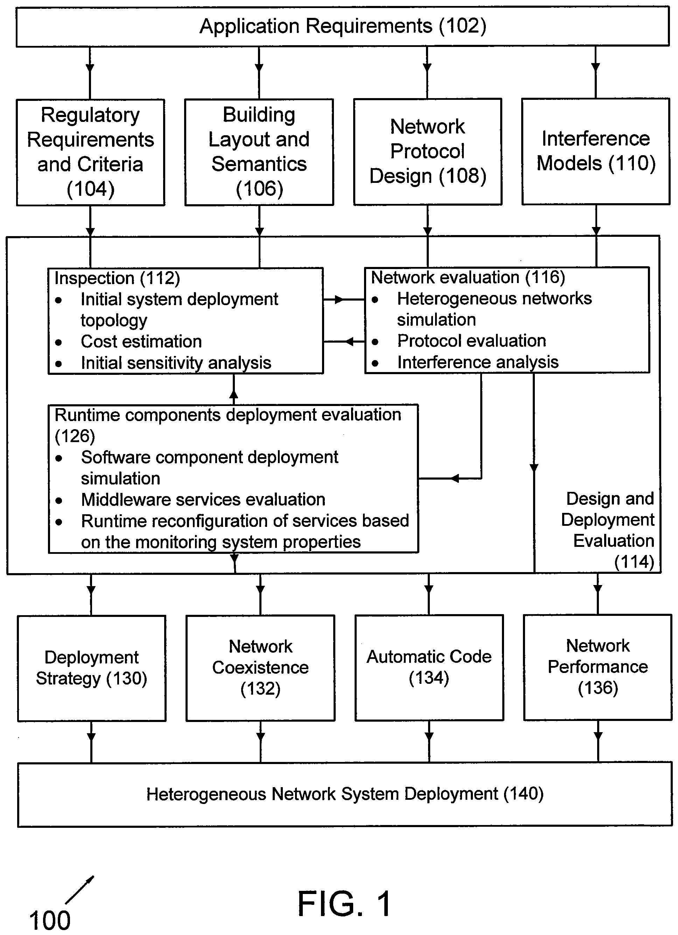

One embodiment of a method 100 of the present invention for deploying and evaluating network systems is illustrated in FIG. 1. Before any system development and deployment occurs, there may be certain prerequisites which may be based on Application Requirements 102. Such prerequisites may include Regulatory Requirements and Criteria 104, Building Layout and Semantics 106, Network Protocol Design 108, and Interference Models 110.

For applications such as security networks, Regulatory Requirements and Criteria 104 may include regulations based on the security grade. There can also be regulations on transmitted power, duty cycle, etc. for the chosen wireless technology and the frequency spectrum.

For indoor installation, Building Layout and Semantics 106 may include a three-dimensional picture of the room considering walls and other static obstacles. Thus, the network performance may be better evaluated.

Network Protocol Design 108 may include assisting in the development of the protocol in a time efficient manner. The protocol may also be fine tuned in order to achieve a desired level of performance.

An installed wireless network can be affected by the other wireless networks that are in the vicinity and that operate in the same or overlapping bands. Interference Models 110 may take into consideration the other networks during the inspection and development phase.

Regulatory Requirements and Criteria 104 and Building Layout and Semantics 106 may be called for during an Inspection phase 112 of Design and Deployment Evaluation 114. Protocol design and interference models may be called for during Network Evaluation 116. Once Inspection phase 112 is over, the collected data may then be used as input during Network Evaluation phase 116.

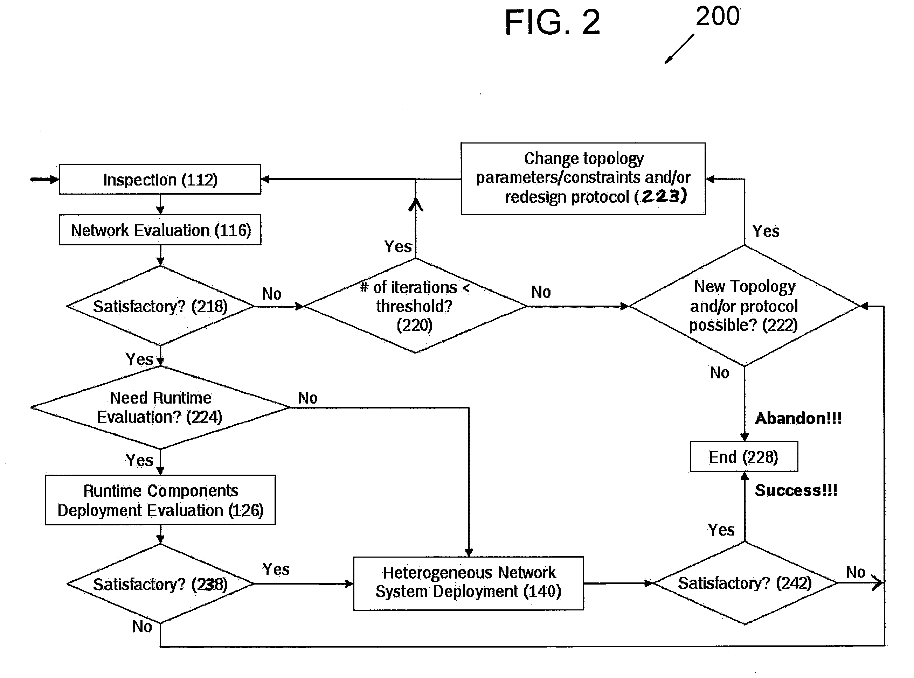

Another related embodiment of a method 200 of the present invention for deploying and evaluating network systems is illustrated in FIG. 2. If in step 218 it is determined that the results are unsatisfactory, then Inspection phase 112 may be repeated again and the cycle may continue. However, if it is determined in step 220 that the cycle has continued more than a predetermined number of times, then it may be determined in step 222 whether a new topology and/or protocol is possible. If a new topology and/or protocol is indeed possible, then topology parameters/constraints may be changed, and/or the network protocol may be redesigned (step 223). The process may be repeated until it is determined in step 218 that a satisfactory result has been obtained. If a satisfactory result cannot be obtained after a predetermined number of tries, and a new topology and/or protocol is not possible (step 222), then the network installation may be abandoned (step 228).

Once network evaluation phase 116 is over, then, depending on the application runtime components (e.g., if a runtime evaluation is needed (step 224)), a deployment evaluation phase 126 may be initiated. Otherwise, the network system may be deployed (step 140).

After the design and deployment evaluation 114 is over, the basic outputs of Deployment Strategy 130, Network Coexistence 132, Automatic Code 134, and Network Performance 136 may be obtained. Deployment Strategy 130 may include ascertaining exact locations at which the nodes (e.g., sensors along with the wired/wireless hardware) should be installed; the total number of nodes; a two- or three-dimensional graphical view; and a cost estimate for a desired configuration or desired configurations.

Network Coexistence 132 may provide details such as whether the wireless network will operate satisfactorily in the presence of other wireless networks in the same band. Network Coexistence 132 may also determine optimal, or near optimal, locations for the nodes of the given network. However, if Network Coexistence 132 is unable to compute optimized locations, then Network Coexistence 132 may evaluate the other networks and determine advantageous locations for the nodes in the other networks so that all networks may coexist with a high level of performance and a low level of interference.

Automatic Code 134 may be generated for the nodes according to the given topology, and thus configuring the nodes with only the basic code (e.g., the code needed for reconfiguration, on-air reprogramming, etc.) may be called for. The final version of the code may be flashed after network evaluation 116 has been successfully completed.

Network Performance 136 may provide network performance details such as packet success rate, latency, etc. Network Performance 136 may be performed for a given sub-network or for the whole network at the same time.

After Runtime Components Deployment Evaluation 126, it may be decided in step 238 whether the deployment is satisfactory. If not, then operation may proceed to step 222 wherein it is determined whether a new topology and/or protocol is possible. If, on the other hand, it is decided in step 238 that the deployment is satisfactory, then the combined knowledge or information gathered from Deployment Strategy 130, Network Coexistence 132, Automatic Code 134, and Network Performance 136 may then be used to efficiently deploy the network in Heterogeneous Network System Deployment 140. As may be inferred from FIG. 1, after all input parameters 102, 104, 106, 108 and 110 are in place, Design and Deployment Evaluation 114 may follow. The present invention may enable Design and Deployment Evaluation 114 to be as automatic as possible so as to avoid the human error that usually arises due to intricate details and tedious computation, which in many cases are not even possible to perform manually.

After a network system has been deployed (step 140), empirical performance information may be used for further evaluation if performance improvement is called for, as determined in step 242. In this case, parameters or logs obtained from the deployed system may be used to perform network evaluation 116 and Runtime Components Deployment Evaluation 126.

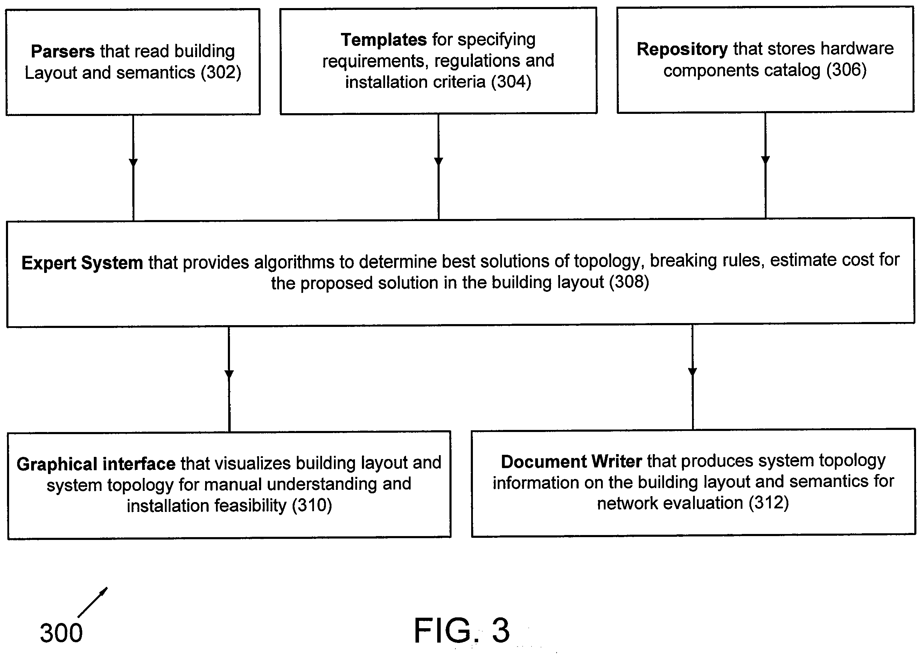

In order to enable automatic inspection, the present invention may import building/layout information which may be in formats different from the format that the invention uses for the inspection. Thus, an automatic inspection arrangement 300 (FIG. 3) of the invention may include parsers 302 which may interpret different formations of building layout information by use of semantics related to the relevant formats used in the system.

Requirements and constraints may be specified using templates 304. A wizard may ask relevant questions to help the user fill out templates 304.

Product information may be stored in a persistent repository 306. Repository 306 may be in the form of a database system or file, which may include a memory device, for example.

An expert system 308 may realize algorithms which may use the aforementioned information to suggest a topology, breaking rules (e.g., rules that may be broken by the system), and a cost estimation. During the evaluation, the solution may visualize or display building layout, location of nodes, coverage of wireless and other related information graphically in two or three dimensions by using graphical interface 310. The system may store evaluation results in either machine readable or human readable formats by use of document writer 312.

Some benefits/features of the automatic inspection provided by arrangement 300 may include a software tool being provided that decides installation locations for safety and security sensor components in a building. The software tool may also network such safety and security sensor components. Arrangement 300 may also automatically generate a security system design based on application requirements and economic constraints. Arrangement 300 may further provide feedback metrics, such as system cost and a geographical coverage area, which may indicate the quality of the design. Another feature of arrangement 300 is that it may provide three-dimensional physical and two-dimensional logical views of the system. Moreover, arrangement 300 may enable both wired and wireless connection of nodes. Lastly, arrangement 300 may provide a deployment tool with cost and coverage estimation.

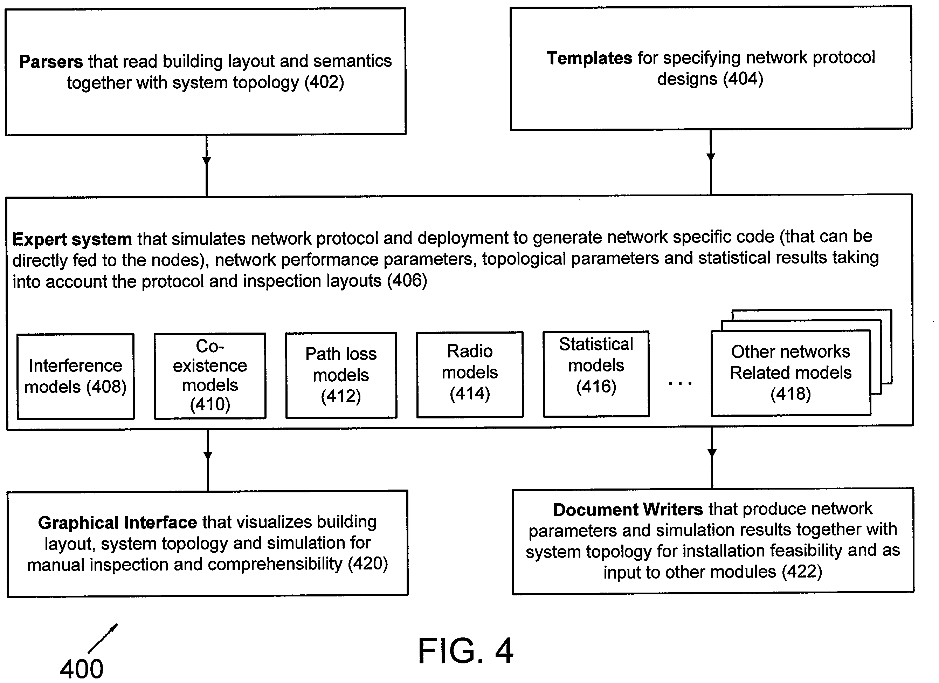

An automatic network evaluation arrangement 400 of the present invention is illustrated in FIG. 4. Similarly to arrangement 300, parsers 402 may be used to read building layout, and templates 404 for specifying network protocol designs may be used as inputs for the network evaluation. An expert system 406 in network evaluation may contain various models, including interference models 408, co-existence models 410, path loss models 412, radio models 414, statistical models 416, and other networks related models 418. These models may provide the evaluation results for the given inputs. While performing the evaluation, necessary information may be visualized or displayed by use of graphical interface 420. The results of the evaluation can also be generated and stored in either machine readable or human readable formats by document writers 422.

Benefits/features of the automatic evaluation provided by arrangement 400 may include that it enables various wireless technologies to be simulated in one place. Another benefit/feature may be that arrangement 400 enables co-existence and interference analysis as well as network performance evaluation. Arrangement 400 may also provide availability of various networking-related models, such as for radio and mobility models, antenna patterns and statistical data analysis. Arrangement 400 may further provide automatic code generation for the hardware.

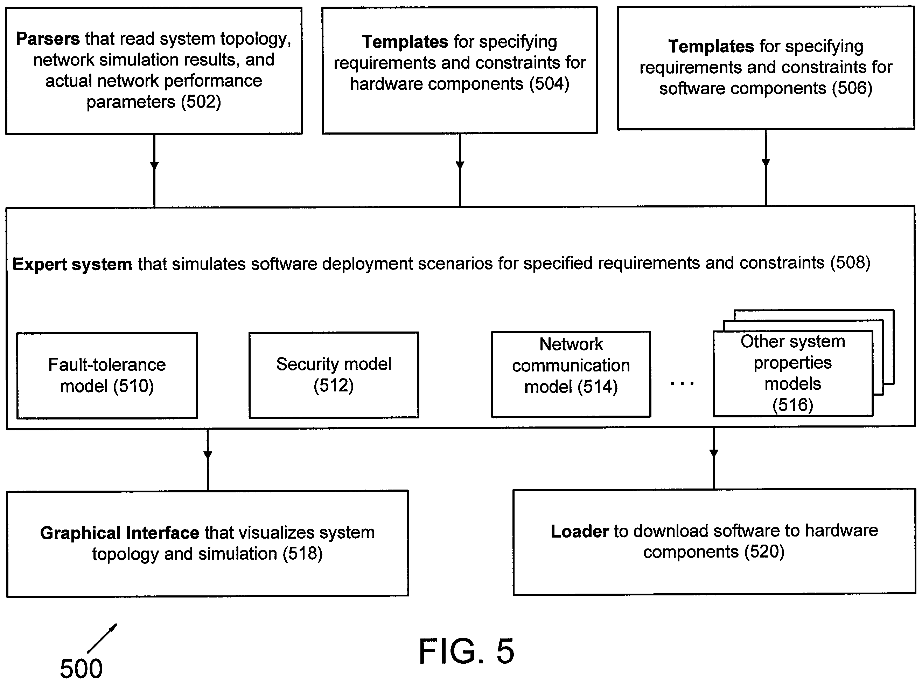

An automatic runtime components deployment arrangement 500 of the present invention is illustrated in FIG. 5. Similarly to arrangements 300 and 400, arrangement 500 may include parsers 502 that read system topology and evaluation results together with requirements and constraints which may be specified by templates 504 and 506. Expert system 508 may provide algorithms to propose software components deployment strategies for the given system. Expert system 508 may include a fault-tolerance model 510, a security model 512, a network communication model 514, and other system properties models 516. While performing the runtime components deployment, system topology and simulation may be visualized or displayed by use of graphical interface 518. A loader 520 may download software to the hardware components.

Benefits/features of the automatic runtime components deployment provided by arrangement 500 may include specification and generation of deployment architecture, as well as visualization and analysis of the distributed system. Arrangement 500 may provide estimation of the quality of deployment in addition to system properties such as latency, bandwidth utilization and security. Arrangement 500 may also provide facilitation of rapid development and comparison of algorithms. Arrangement 500 may further provide deployment of software components/services onto hardware with analysis of system properties. Finally, arrangement 500 may provide runtime reconfiguration of services based on the monitored system properties.

The present invention may provide a novel system that presents efficient solutions for installing, evaluating and handling run-time wired or wireless network deployment issues, especially in indoor environments. Existing methods target such issues only partially and independently. These known methods are insufficient because they do not consider interdependencies amongst the features of individual problems, unlike the present invention. One example of an application that may be suitable for the invention is in wireless networks for intrusion/fire/access detection, such as disclosed in U.S. patent application Ser. No. 12/038,531, filed Feb. 27, 2008, entitled "Method for Data Collection and Supervision in Wireless Node Networks".

The invention may provide a complete end-to-end method and system for topology and cost estimation, network simulation, and hardware and software component deployment for commercial and residential buildings. Different tools may be integrated together to arrive at the end-to-end system and method of the invention.

The various novel tool features of the invention may include graphical visualization of topology in two-dimensional and three-dimensional formats; an expert system that provides algorithms to determine a system topology given requirements and constraints for target domains; a simulation environment that uses the physical environment for radio frequency-related analysis; an expert system that provides algorithms to determine software component deployment given the network characteristics obtained from simulation results and constraints for the system topology; determining software components/services deployment; and automatic code generation for deployment on the network nodes. Yet another novel feature of the invention is the procedure provided for deciding node locations.

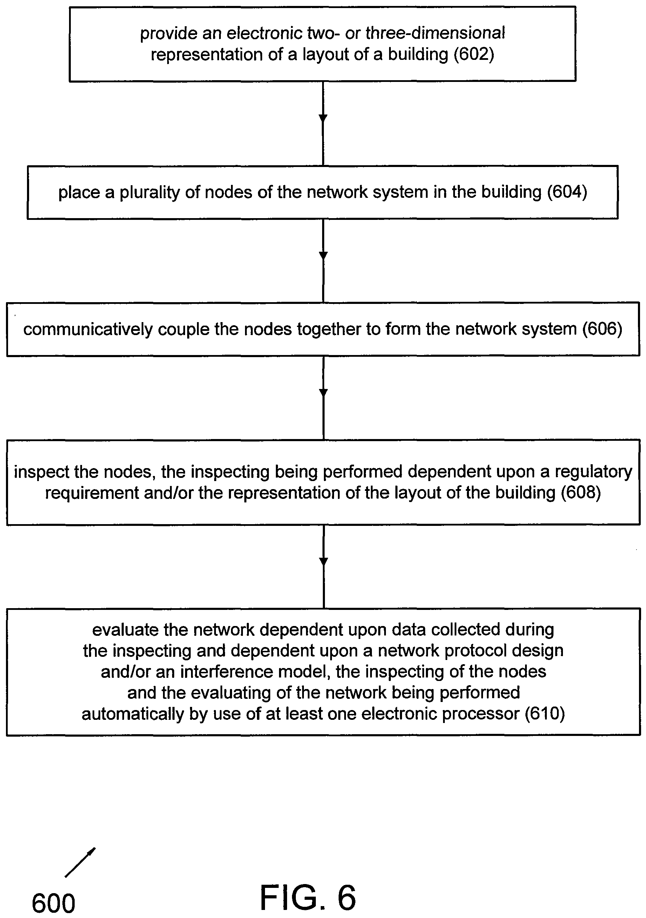

One embodiment of a method 600 for deploying and evaluating a network system is illustrated in FIG. 6. In a first step 602, an electronic two- or three-dimensional representation of a layout of a building is provided. For example, an electronic representation of the locations of the walls of a building in three-dimensional space may be provided.

In a next step 604, a plurality of nodes of the network system are placed in the building. For example, in the case of a network in the form of a security system, nodes in the form of motion detectors and window/door sensors may be strategically placed at various locations of the building in order to sense breaches of security.

Next, in step 606, the nodes are communicatively coupled together to form the network system. That is, the security sensors and detectors may be placed in wireless or wired communication such that each of these nodes can communicate with at least one other one of the nodes.

In step 608, the nodes are inspected dependent upon a regulatory requirement and/or the representation of the layout of the building. For example, the inspection may include an initial system deployment topology inspection, an estimation of the cost of permanently installing and/or operating the nodes, and an initial analysis of the sensitivity of the performance of the nodes to adjustments in the locations of the nodes. The inspection may include ensuring that the placement and performance of the nodes meets regulatory requirements. The layout of the building may be used as an input for any aspect of the inspection described above.

In a final step 610, the network is evaluated dependent upon data collected during the inspecting and dependent upon a network protocol design and/or an interference model. The inspecting of the nodes and the evaluating of the network is performed automatically by use of at least one electronic processor. The network evaluation may include heterogeneous networks simulation, protocol evaluation, and interference analysis. Advantageously, the inspecting and evaluating may be automatically performed using any type of electronic processor. Thus, any human input to the inspecting and evaluating processes may be limited.

Unless stated otherwise herein, it is to be understood that the processes, steps and methods in any of the embodiments described herein may be performed automatically by use of electronics. Such electronics may include at least one electrical processor.

## Claims

1. An arrangement (300), comprising:
at least one parser (302) configured to read a system topology;
at least one template (304) configured to specify requirements, regulations and/or criteria for installation of a network to be installed within a building;
an expert system (308, 406) communicatively coupled to the at least one parser (302) and to the at least one template (304), the expert system (308, 406) being configured to receive inputs from the at least one parser (302) and from the at least one template (304) and, in response thereto, simulate deployment of the network, the expert system (308, 406) including a plurality of models (408, 410, 412, 414, 416, 418) configured to provide at least one of simulation results and evaluation results in response to the inputs from the at least one parser (302) and the at least one template (304); and
a graphical interface (420) configured to receive the simulation results from the expert system (308, 406) and display system topology and the simulation results,
the arrangement (300) **characterized in that**:
the arrangement (300) comprises an automatic network arrangement and the at least one template (304) is configured to specify a network protocol design;
the expert system (308, 406) is configured to simulate network protocol and deployment to generate at least one of network performance parameters, and statistical results, and
wherein the generating is dependent upon the specified network protocol design.

2. The arrangement (300) of claim 1, wherein the at least one parser (302) is configured to read a building layout.

3. The arrangement (300) of claim 1, wherein the arrangement further comprises a document writer (321, 422) configured to receive the results from the expert system (308, 406) and produce network parameters, simulation results and system topology.

4. The arrangement (300) of claim 1, wherein the arrangement (300) comprises an automatic runtime components deployment arrangement and the at least one parser (302) is configured to read network simulation results.

5. The arrangement (300) of claim 1, wherein the arrangement (300) comprises an automatic runtime components deployment arrangement and the at least one template (304) is configured to specify requirements and constrains for at least one of software components of the network and hardware components of the network.

6. The arrangement (300) of claim 5, wherein the expert system (308, 406) is configured to simulate software deployment scenarios for the specified requirements and constraints.

7. The arrangement (300) of claim 1, wherein the arrangement (300) comprises an automatic runtime components deployment arrangement and the expert system (308, 406) includes at least one of a fault-tolerance model, a security model, and a network communication model.

8. The arrangement (300) of claim 1, wherein the arrangement (300) comprises an automatic runtime components deployment arrangement and further comprises a loader (520) configured to receive the simulation results from the expert system (308, 406) and download software to hardware components of the network.

## Patentansprüche

1. Anordnung (300), umfassend:
mindestens einen Parser (302), der dafür ausgestaltet ist,
eine Systemtopologie zu lesen,
mindestens eine Formatvorlage (304), die dafür ausgestaltet ist, Anforderungen, Vorschriften und/oder Kriterien für die Installation eines in einem Gebäude zu installierenden Netzwerks zu spezifizieren,
ein Expertensystem (308, 406), das kommunikativ mit dem mindestens einen Parser (302) und der mindestens einen Formatvorlage (304) gekoppelt ist, wobei das Expertensystem (308, 406) dafür ausgestaltet ist, Eingaben von dem mindestens einen Parser (302) und der mindestens einen Formatvorlage (304) zu empfangen und in Reaktion darauf eine Verwendung des Netzwerks zu simulieren, wobei das Expertensystem (308, 406) mehrere Modelle (408, 410, 412, 414, 416, 418) umfasst, die dafür ausgestaltet sind, mindestens eines von Simulationsergebnissen und Auswertungsergebnissen in Reaktion auf die Eingaben von dem mindestens einen Parser (302) und der mindestens einen Formatvorlage (304) bereitzustellen, und
eine grafische Schnittstelle (420), die dafür ausgestaltet ist, die Simulationsergebnisse von dem Expertensystem (308, 406) zu empfangen und die Systemtopologie und die Simulationsergebnisse anzuzeigen,
wobei die Anordnung (300) **dadurch gekennzeichnet ist, dass**:
die Anordnung (300) eine automatische Netzwerkanordnung umfasst und die mindestens eine Formatvorlage (304) dafür ausgestaltet ist, ein Netzwerkprotokoll-Design zu spezifizieren,
das Expertensystem (308, 406) dafür ausgestaltet ist, Netzwerkprotokoll und Verwendung zu simulieren, um mindestens eines von Netzwerkleistungsparameters und statistischen Ergebnissen zu generieren, und
wobei das Generieren von dem konkreten Netzwerkprotokoll-Design abhängig ist.

2. Anordnung (300) nach Anspruch 1, wobei der mindestens eine Parser (302) dafür ausgestaltet ist, ein Gebäude-Layout zu lesen.

3. Anordnung (300) nach Anspruch 1, wobei die Anordnung des Weiteren einen Dokumentschreiber (321, 422) umfasst, der dafür ausgestaltet ist, die Ergebnisse von dem Expertensystem (308, 406) zu empfangen und Netzwerkparameter, Simulationsergebnisse und eine Systemtopologie zu erzeugen.

4. Anordnung (300) nach Anspruch 1, wobei die Anordnung (300) eine automatische Laufzeitkomponentenverwendungsanordnung umfasst und der mindestens eine Parser (302) dafür ausgestaltet ist, Netzwerksimulationsergebnisse zu lesen.

5. Anordnung (300) nach Anspruch 1, wobei die Anordnung (300) eine automatische Laufzeitkomponentenverwendungsanordnung umfasst und die mindestens eine Formatvorlage (304) dafür ausgestaltet ist, Anforderungen und Beschränkungen für mindestens eines von Software-Komponenten des Netzwerks und Hardware-Komponenten des Netzwerks zu spezifizieren.

6. Anordnung (300) nach Anspruch 5, wobei das Expertensystem (308, 406) dafür ausgestaltet ist, Software-Verwendungsszenarios für die spezifizierten Anforderungen und Beschränkungen zu simulieren.

7. Anordnung (300) nach Anspruch 1, wobei die Anordnung (300) eine automatische Laufzeitkomponentenverwendungsanordnung umfasst und das Expertensystem (308, 406) mindestens eines von einem Fehlertoleranzmodell, einem Sicherheitsmodell und einem Netzwerkkommunikationsmodell umfasst.

8. Anordnung (300) nach Anspruch 1, wobei die Anordnung (300) eine automatische Laufzeitkomponentenverwendungsanordnung umfasst und des Weiteren einen Lader (520) umfasst, der dafür ausgestaltet ist, die Simulationsergebnisse von dem Expertensystem (308, 406) zu empfangen und Software zu Hardware-Komponenten des Netzwerks herunterzuladen.

## Revendications

1. Agencement (300) comprenant :
au moins un analyseur (302) configuré pour lire une topologie de système ;
au moins un gabarit (304) configuré pour spécifier des exigences, des règles et/ou des critères pour l'installation d'un réseau à installer dans un bâtiment ;
un système expert (308, 406) couplé de manière communicative audit au moins un analyseur (302) et audit au moins un gabarit (304), le système expert (308, 406) étant configuré pour recevoir des entrées à partir dudit au moins un analyseur (302) et dudit au moins un gabarit (304) et, en réponse à cela, simuler le déploiement du réseau, le système expert (308, 406) comprenant une pluralité de modèles (408, 410, 412, 414, 416, 418) configurés pour fournir au moins l'un de résultats de simulation et de résultats d'évaluation en réponse aux entrées à partir dudit au moins un analyseur (302) et dudit au moins un gabarit (304) ; et
une interface graphique (420) configurée pour recevoir les résultats de simulation à partir du système expert (308, 406) et afficher la topologie du système et les résultats de simulation,
l'agencement (300) étant **caractérisé en ce que** :
l'agencement (300) comprend un agencement de réseau automatique, et ledit au moins un gabarit (304) est configuré pour spécifier une conception de protocole de réseau ;
le système expert (308, 406) est configuré pour simuler un protocole de réseau et un déploiement pour générer au moins l'un de paramètres de performance de réseau et de résultats statistiques, et
dans lequel la génération dépend de la conception de protocole de réseau spécifiée.

2. Agencement (300) selon la revendication 1, dans lequel ledit au moins un analyseur (302) est configuré pour lire un agencement de bâtiment.

3. Agencement (300) selon la revendication 1, dans lequel l'agencement comprend en outre un enregistreur de document (321, 422) configuré pour recevoir les résultats à partir du système expert (308, 406) et produire des paramètres de réseau, des résultats de simulation et une topologie de système.

4. Agencement (300) selon la revendication 1, dans lequel l'agencement (300) comprend un agencement de déploiement de composants d'exécution automatique et ledit au moins un analyseur (302) est configuré pour lire des résultats de simulation de réseau.

5. Agencement (300) selon la revendication 1, dans lequel l'agencement (300) comprend un agencement de déploiement de composants d'exécution automatique et ledit au moins un gabarit (304) est configuré pour spécifier des exigences et des contraintes pour au moins l'un de composants logiciels du réseau et de composants matériels du réseau.

6. Agencement (300) selon la revendication 5, dans lequel le système expert (308, 406) est configuré pour simuler des scénarios de déploiement de logiciels pour les exigences et les contraintes spécifiées.

7. Agencement (300) selon la revendication 1, dans lequel l'agencement (300) comprend un agencement de déploiement de composants d'exécution automatique et le système expert (308, 406) comprend au moins l'un d'un modèle de tolérance aux pannes, d'un modèle de sécurité, et d'un modèle de communication de réseau.

8. Agencement (300) selon la revendication 1, dans lequel l'agencement (300) comprend un agencement de déploiement de composants d'exécution automatique et comprend en outre un chargeur (520) configuré pour recevoir les résultats de simulation à partir du système expert (308, 406) et télécharger des logiciels sur des composants matériels du réseau.
